# EUROPEAN PATENT SPECIFICATION

(11) **EP 0 572 499 B1**
(45) Date of publication and mention of the grant of the patent: **12.06.1996**
(21) Application number: 92905545.7
(22) Date of filing: 25.02.1992
(51) Int. Cl.: B65G 17/32, B65G 17/20, B61B 10/02, B65G 39/09

(54) **CONVEYOR TROLLEY WHEEL ASSEMBLY**
LAUFWERKZUSAMMENBAU FÜR FÖRDERER
TRAIN DE ROULEMENT DE CONVOYEUR

(30) Priority: 26.02.1991 AU 4801/91; 02.10.1991 AU 8691/91
(43) Date of publication of application: 08.12.1993
(73) Proprietor: VFV POLYMERS PTY LTD., East Brunswick, VIC 3057 (AU)
(72) Inventor: McMULLEN, Russell, East Brunswick, VIC 3057 (AU)
(74) Representative: Ajello, Michael John
(86) International application number: AU9200079
(87) International publication number: WO9214665

(56) References cited:
- WO-A-84/00349
- AU-A- 729 855
- AU-A- 5 501 980
- US-A- 2 830 694
- US-A- 4 228 738
- US-A- 4 858 752
- DERWENT ABSTRACT Accession No. K1294Y/45, class Q35; & SU,A,529976 (IGNATOV), 2 December 1976 (02.12.76).
- DERWENT ABSTRACT Accession No. 87-127972/18, class Q35; & SU,A,1257027 (CONVEYOR DES INST), 15 September 1986 (15.09.86).
- DERWENT ABSTRACT Accession No. 84-268200/43, class Q35; & SU,A,1076378 (BRYAN TRANSP EQPT), 28 February 1984 (28.02.84).
- DERWENT ABSTRACT Accession No. K6852W/39, class Q35; & SU,A,449858 (DYATLOV), 3 April 1975 (03.04.75).

## Description

The present invention relates to improvements in rollers for use in conveying equipment, particularly of the type adapted to convey manufactured parts through a series of manufacturing stages.

Commonly conveying equipment of this type is often used to convey parts into and out of ovens where paint or the like might be dried or cured. Thus the conveying equipment must also be capable of withstanding the environmental conditions through which such parts are moved. In one configuration, rollers of the aforementioned kind consist of a metal wheel adapted to rotate and roll on a suitable guide track with a hanger element depending therefrom which carries the part to be transported. Commonly two such wheels might be located oppositely disposed with their respective hangers commonly joined and carrying the part to be transported. There are numerous other forms of similar conveyors where there is some form of wheel assembly or combination arranged in use to roll in, on, over or around a metal guide track of a desired formation. For example there are known arrangements comprising pairs of wheels journaled on a support structure with adjacent support structures interconnected by universal pivoting joints. The pairs of wheels may in some situations be arranged such that adjacent pairs have their axes of rotation generally at right angles to one another. These assemblies are often used when lighter loads are to be carried and perhaps tighter curves in the desired track are required. In such arrangements heavier loads can be accommodated by adding wheel pairs to the assembly. Commonly conveying arrangements as aforesaid, whatever, the combination or configuration, have traditionally used metal wheels with some form of bearing that required lubrication. The lubrication normally being supplied periodically by application of a grease gun to a grease nipple provided for the purpose. When such roller wheels pass into and out of ovens operating at temperatures often in excess of 209°C, there is considerable strain placed on the lubricating performance of the grease. In addition, in some conveying systems, the supporting wheel combinations may be required to travel through refrigeration areas or the like where very cold temperatures can be experienced which provide a further factor affecting wheel and lubricant performance. As a result very expensive greases must be used. Despite this, even the greases available for use in hot temperature zones have temperature capabilities just above the usual oven operating temperatures and can fail in unusual conditions, i.e. being stalled in the oven zone for a longer than usual time. Of course there are also situations where conveyor systems operate in ambient or near ambient temperature conditions. Often one or more people can be continuously employed to supply grease to the rollers or wheels as they pass a certain point in the conveying system so that grease is used in such cases at a reasonably high rate. The operators can, however, occasionally overfill the roller wheels with grease and this can lead to seizure of the wheels. Finally, metal wheels rolling on metal guide tracks have the disadvantage of creating substantial and unwanted noise. There are, therefore, a substantial number of problems with these existing wheels.

In US Patent No. 4,228,738 there is disclosed a wheel configuration for use in a conveying system including a guide track, wherein the wheel configuration is adopted to be mounted from a support which in turn is intended to carry a load along the guide track. The wheel configuration further includes a shaft member adapted to be fixed to the support, a wheel body formed of polymer materials such as nylon material having a low coefficient of friction with an outer peripheral surface adapted to roll along the guide track and an inner peripheral surface adapted bear on the shaft member whereby the wheel body rotates during rolling along the guide track. Further retainer means is provided on an outboard end of the shaft member radially extending therefrom to retain the wheel body on the shaft member between the retaining means and the support. Connection means in the form of screws or bolts are provided to join the shaft member to the support in a manner preventing excess pressure being applied to radial faces of the wheel body.

The objective of the present invention is, therefore, to provide a wheel assembly for conveyor systems of the aforementioned kind for use in carrying reasonably bearing loads through harsh environments including high and low temperatures which will avoid the need of lubrication such as grease and thereby overcome or substantially minimise some if not all of the foregoing difficulties with presently used metal wheel systems.

According to one aspect of the present invention there is provided a wheel assembly adapted for connection rotatably to a support means for use in a conveying system including a guide track along which the wheel assembly is adapted to move while said support means carries a load, said wheel assembly including shaft member means, a wheel body formed of polymer materials having an outer peripheral surface adapted to roll along said guide track, first retainer means extending outwardly from said shaft member means at an outboard end of said shaft member means relative to said support means said first retainer means having an outer perimeter located at a radial distance intermediate the outer peripheral surface of said wheel body and an outer diameter of said shaft member means, and connection means adapted to connect said shaft member means to said support means and positively preventing axial pressure being applied to radial faces of said wheel body beyond a predetermined limit permitting operational rotation of said wheel body when assembled, said wheel assembly being characterized by separate dry bearing means axially extending between said shaft member means and said wheel body, said bearing means having an inherent dry coefficient of friction adapted to permit rotation of said dry bearing means on said shaft member means during rolling of said wheel body along said guide track, said bearing means further having a first axially facing bearing surface having a radially outer edge at a radial distance at least equal to that of said outer perimeter of the first retainer means whereby sliding bearing contact occurs between said first axial facing bearing surface and an inner surface of said first retainer means.

Conveniently, the polymer material of the wheel body is a high temperature resistant, hard wearing plastics material. The wheel body may for example be made from a composite material based on a high temperature resin bound and reinforced with fibre or fibre laminates. The resin may be high temperature epoxy or phenolic resin and the fibres may be aramid fibres or fibre laminates.

Preferably the solid bearing is produced from a blend of PTFE (polytetrafluoroethylene) and minerals which are selected for high temperature bearing use. The solid bearing may conveniently comprise an annular section having radially extending end regions located at either end. The solid bearing thereby is provided with axially extending and radially extending bearing surfaces between the metal shaft and its end flanges and the bearing material.

In a particularly preferred embodiment the bearing is formed by a pair of bearing half parts of substantially the same shape each having one of the radially extending regions. In this manner the bearing half parts might in use be swapped about to accommodate possible uneven wear and thereby extend the operational life of the assembly. Moreover, if one part becomes damaged, the part might be readily replaced without having to replace the whole bearing.

Several preferred embodiments will hereinafter be described with reference to the accompanying drawings in which :-
Figure 1 is a side view of a wheel assembly and hanger in combination;
Figure 2 is a longitudinal cross-sectional view through the wheel region of the assembly shown in Figure 1;
Figure 3 is a view similar to Figure 1 showing an alternative embodiment;
Figure 4 is a longitudinal cross-sectional view through the wheel region of the assembly shown in Figure 3; and
Figures 5 to 8 are cross-sectional views through wheel assemblies of alternative preferred embodiments.

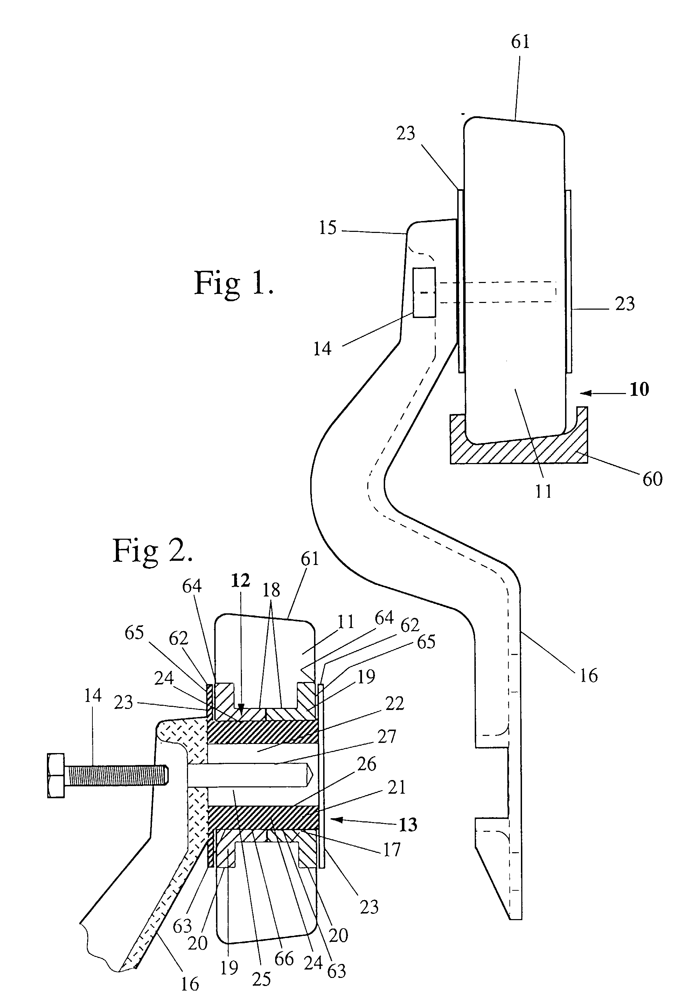

With regard to Figures 1 and 2, the wheel assembly and hanger combination comprises an assembly 10 including a wheel body 11, a solid bearing 12, metal shaft 13, a fastening screw or bolt element 14 and a hanger 15. The hanger 15 includes a depending section 16 which operates with another similarly constructed assembly to carry a part through a series of manufacturing steps. In use the pair of wheel bodies roll on an appropriate guide track 60 to achieve the desired transport of the part.

The wheel assembly comprises a solid wheel body 11 made of a high temperature hard wearing plastics material having an outer peripheral rolling surface 61 formed from the plastics material which will have the effect of achieving the required wear characteristics while limiting the amount of noise generated during use of the assembly. The plastics material may be a high temperature resistant epoxy or phenolic based resin bound and reinforced with aramid fibre laminates. The wheel body 11 has a central bore 17 to accommodate the bearing 12 and the mounting shaft 13. The bearing 12 is conveniently formed in two parts of substantially the same shape and dimensions each having an axial section 18 with an inner bearing surface 63 in contact with the shaft 13 and a radially extending flange 19 which is accommodated in an annular recess 20 in the wheel body 11. The flange 19 has an axially facing bearing surface 65 with a radially outer edge 64. The mounting shaft 13 has an outer diameter 66 and is also preferably constructed in two parts 21, 22 each having a radially extending flange 23 having an outer perimeter 62 of similar dimensions to the flanges 19 of the bearing. The shaft part 21 includes an axial section 24 of a length equivalent to twice the axial length of one bearing part so that the two bearing parts are effectively retained between the flanges 23 of the mounting shaft 13. In this manner axial and radial bearing surfaces are provided. The shaft mounting part 22 includes an axial extending trunnion 25 which is received within a bore 26 within the shaft part 21. Finally a single screw or bolt 14 may be used to pass through the hanger 15 and the shaft parts 21, 22 to be screwed into a bore 27 in the shaft part 22 to hold the complete assembly together. If desired, a spring washer may also be used to prevent loosening of the bolt during use.

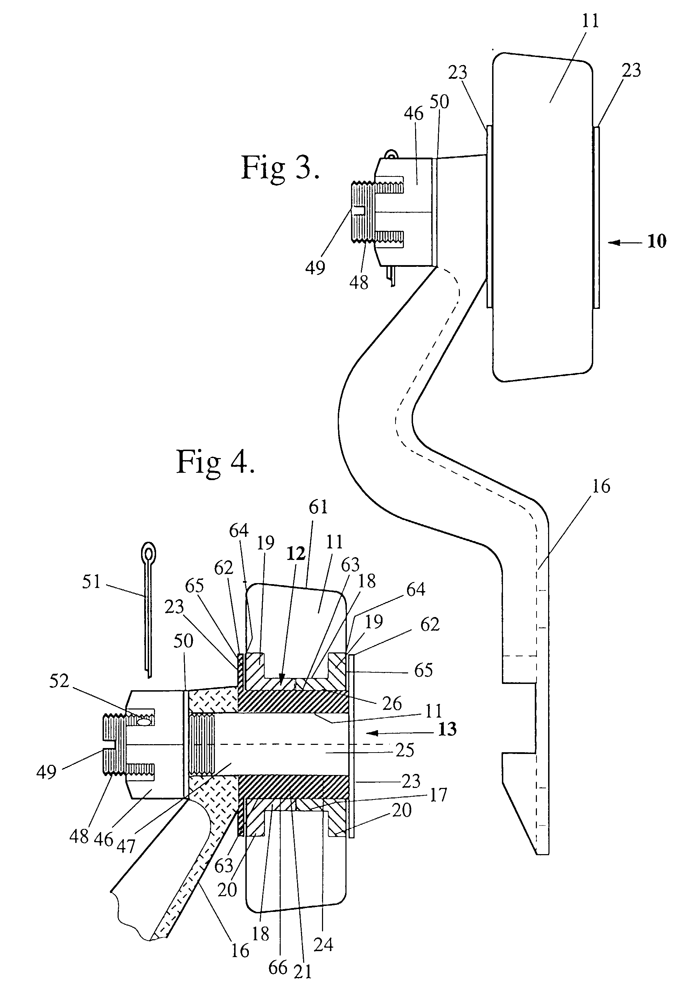

Figures 3 and 4 illustrate an embodiment similar to Figures 1 and 2 except that in this case, the trunnion of shaft part 22 includes a coaxially extending shaft portion 47 with an outward thread formation 48 that is adapted to pass through the shaft part 21 and the hanger 16 to be engaged by a castellated nut 46. The end of the shaft portion 47 may include a slot 49 enabling engagement with a screw driver to allow the element 22 to be held stationary while tightening the nut thereon.

If desired, a spring washer 50 or some other washer designed to inhibit loosening of the nut 46 might be used. Finally a split pin 51, can be employed engaging within a transverse hole 52 in the shaft portion 47 and the nut 46 to positively prevent loosening of the nut 46.

In the foregoing manner, the provision of a wheel and hanger assembly is achieved without the need to use any separate lubrication system and which can be safely used in high, low or ambient temperature situations.

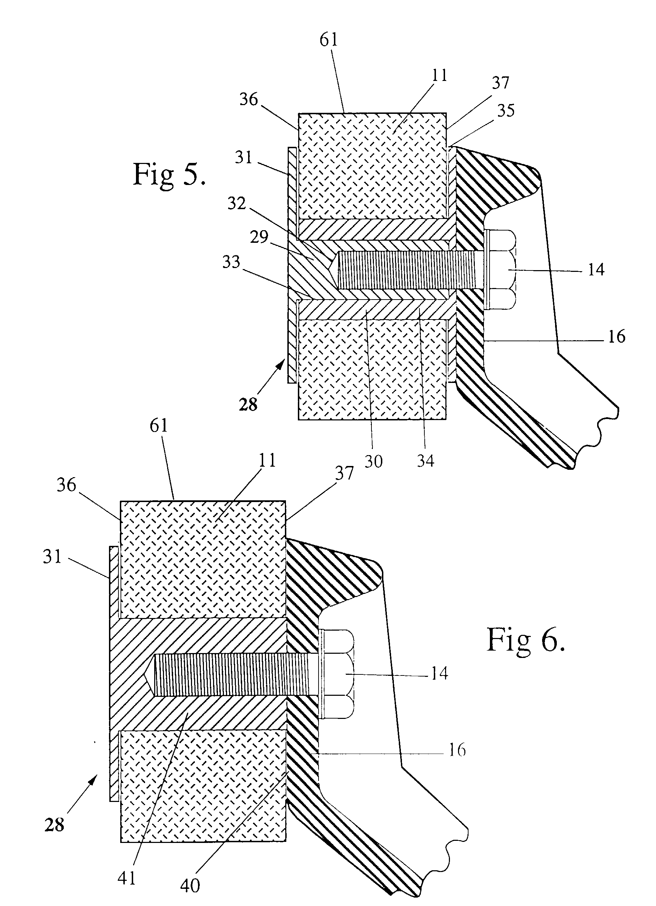

Figures 5 to 8 illustrate further differing preferred wheel constructions within the scope of the present invention which would include bearing means 12 not as illustrated in figures 1 to 4 but with the bearing means 12 omitted for the sake of clarity. Figure 5 illustrates a wheel body 11 mounted on a shaft member 28. The shaft member 28 may be produced from a metal such as steel and is formed of two sections 29, 30. The section 29 includes an outboard retaining flange 31 and an inner shaft part 32 received within a bore 33 of a shaft part 34 of the second section 30. The second section 30 may also include a radially extending retainer flange 35. The length of the shaft part 34 is selected to be no less than the width of the wheel body 11 so that when a connecting means 14 such as a bolt is tightened, substantially no axial pressure is applied against the radial faces 36, 37 of the wheel body 11.

Figure 6 illustrates a configuration where the shaft member 39 is formed in one part with a face 40 of the support member 16 acting as the inboard retaining element for the wheel body 11. In this case, the length of the shaft section 41 of the member 39 is no less than the width of the wheel body 11 so that no axial pressure is applied against the faces 36, 37 of the wheel body when the bolt 14 is tightened.

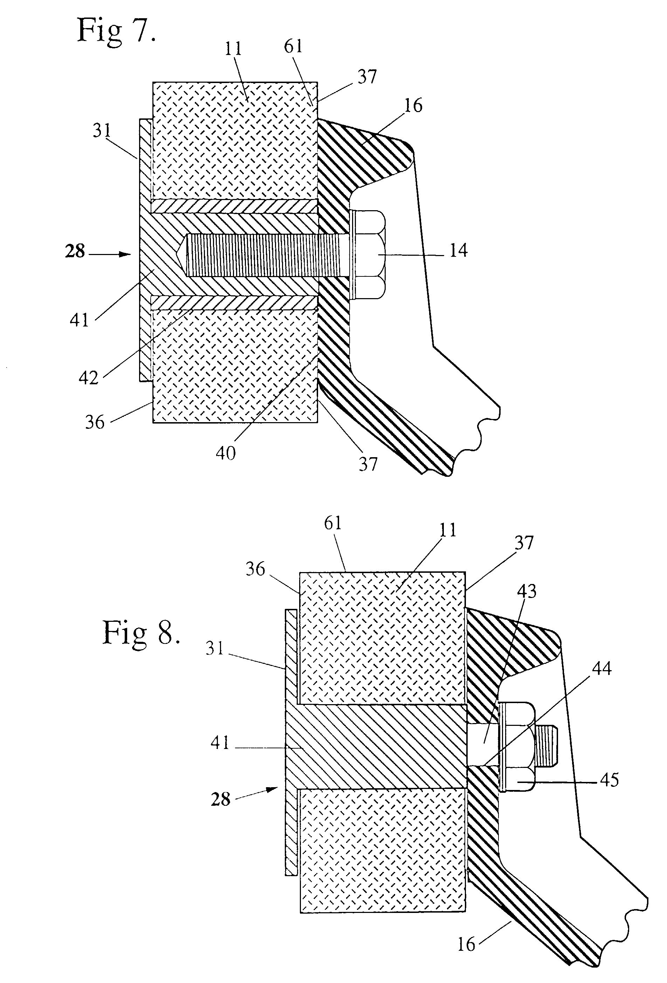

Figure 7 illustrates a still further configuration similar to Figure 6 but in this case including a plain tubular bearing 42 of a low coefficient of friction material such as PTFE based materials. It will of course be appreciated that, depending on the application, such a plain tubular bearing might be included in the embodiments of Figures 5 and 6. Moreover a bearing arrangement as disclosed in Figures 2 and 4 is also used.

Figure 8 illustrates a still further possible embodiment. In this case the shaft section 41 has an outboard flange 31 and a section of reduced diameter 43 which passes through a bore 44 in the support member 16. The reduced diameter section 43 may be threaded along its length or plain through the member 16 but at least its end is threaded to allow a nut 45 and washer or lock washer to secure the assembly together as illustrated. Naturally any of the previously described bearing arrangements is also used in this embodiment.

The wheel body 11 may itself be produced from a number of differing thermosetting plastics materials. The wheel body 11 may be based on thermosetting reinforced resins with reinforcing materials being synthetic or natural minerals in nature. The wheel body may be formed of synthetic fibre reinforced resin, either filament wound or laminated depending upon the application of the product. Wheel construction can also be in the form of molded, reinforced resins with the reinforcement being mineral based products, i.e. glass fibre, glass bead, carbon, coke, graphite or other natural occurring minerals. Reinforcing materials can also be polymeric in nature, i.e. other thermoplastic and/or thermoset resins blended with the base resin to reinforce construction of the wheel body. All resin components used in the wheel body construction should have required strength, wear resistance, corrosion resistance and environment compatibility for the intended purpose of the unit.

Bearings used in the wheel assembly should have a low dry coefficient of friction and therefore require no lubrication. Desirably any bearing materials used should have long life and low maintenance characteristics.

Bearings used in the wheel assembly may be thermoplastic and/or thermoset in nature with the primary purpose being as a self-lubricating, long life, low maintenance component. Basic construction of the bearings can be in the form of molded and machined bearings utilising Polytetrafluoroethylene (PTFE) with natural, mineral or synthetic reinforcements to give strength, improved wear characteristics, environmental compatibility and low frictional coefficients. Construction of the bearings can also be in the form of extruded and machined, injection molded or automatically molded resin products and reinforcing materials including but not limited to PTFE based materials.

The axial or shaft assemblies may be in the form of plated steel, stainless steel or other material compatible with the wheel body and bearing components and the environmental conditions of the end application. The design of the split axle allows the user to safely assemble the various components without over torquing the wheel / bearing assembly thus causing excessive loading on the assembly. Straight axles can also be utilised in applications where wheel assembly is to retrofit existing hardware and a split axle design is inappropriate.

Components are designed to be used in conjunction with the operating conditions of the end user. Combinations of materials and production processing are predicated on actual applications. All materials are designed to function in the broadest possible environmental and operating conditions including but not limited to cryogenic temperatures, high temperatures up to 350°C., corrosive environments, water, steam, under loads in excess of 1000 kg, and at speeds up to 120 metres per minute, all without the use of liquid or semi-liquid lubrication.

In one preferred construction for high or low temperature operation, the wheel body may be formed by winding fibre laminates or filaments onto a mandrel. The laminates may be in the form of sheets or a continuous web and preferably are aramids. The filament or laminate may be passed through a bath of resin prior to winding on the mandrel. Alternatively the reinforcing filament or laminate could be impregnated with resin after winding on the mandrel. Conveniently the resin is adapted to resist the intended temperatures and temperature gradients of end use but may be a high temperature epoxy or phenolic resin. After curing of the resin, the construction is removed from the mandrel and this construction can then be divided into wheel components and machined to the desired sizes and final shape. The advantage of this form of construction is that the reinforcing distributes the loads around the wheel rather than being located at a point as would be the case with a cast plastics material wheel.

## Claims

1. A wheel assembly (10) adapted for connection rotatably to a support means (15,16) for use in a conveying system including a guide track (60) along which the wheel assembly (10) is adapted to move while said support means (15,16) carries a load, said wheel assembly (10) including shaft member means (13,28), a wheel body (11) formed of polymer materials having an outer peripheral surface (61) adapted to roll along said guide track (60), first retainer means (23,31) extending outwardly from said shaft member means (13,28) at an outboard end of said shaft member means (13,28) relative to said support means (15,16) said first retainer means (23,31) having an outer perimeter (62) located at a radial distance intermediate the outer peripheral surface (61) of said wheel body (11) and an outer diameter (66) of said shaft member means (13,28), and connection means (14) adapted to connect said shaft member means (13,28) to said support means (15,16) and positively preventing axial pressure being applied to radial faces of said wheel body (11) beyond a predetermined limit permitting operational rotation of said wheel body (11) when assembled, said wheel assembly (10) being characterized by separate dry bearing means (12) axially extending between said shaft member means (13,28) and said wheel body (11), said bearing means (12) having an inherent dry coefficient of friction adapted to permit rotation of said dry bearing means (12) on said shaft member means (13,28) during rolling of said wheel body (11) along said guide track (63), said bearing means (12) further having a first axially facing bearing surface (65) having a radially outer edge (64) at a radial distance at least equal to that of said outer perimeter (62) of the first retainer means (23,31) whereby sliding bearing contact occurs between said first axial facing bearing surface (65) and an inner surface of said first retainer means (23,31).

2. A wheel assembly (10) according to claim 1 further characterized by second retainer means (23, 35, 53, 55) located at an inboard end of said shaft member means (13,28) relative to said first retainer means (23,31), said bearing means (12) including a second axially facing bearing surface (65) whereby sliding bearing contact occurs between said second axially facing bearing surface (65) and an inner surface of said second retainer means (23, 35, 53, 55).

3. A wheel assembly (10) according to claim 1 characterized in that said first retainer means (23,31) is integrally formed with said shaft member means (13,28).

4. A wheel assembly (10) according to claim 2 or claim 3 characterized in that said second retainer means (23, 35, 53, 55) is integrally formed with said shaft member means (13,28).

5. A wheel assembly (10) according to claim 1 characterized in that said wheel body (11) is formed from thermosetting plastics material.

6. A wheel assembly (10) according to claim 5 characterized in that said wheel body (11) is formed from thermosetting plastics material reinforced with fibre materials.

7. A wheel assembly (10) according to claim 6 characterized in that said fibre materials are wound or laminated and bonded by a thermosetting resin.

8. A wheel assembly (10) according to claim 6 or 7 characterized in that said fibre materials are aramids.

## Patentansprüche

1. Radanordnung (10) zur drehbaren Verbindung mit einer Trageinrichtung (15,16) für die Verwendung in einem Fördersystem mit einer Führungsschiene (60), längs der sich die Radanordnung (10) bewegen kann, während die Trageinrichtung (15,16) eine Last trägt, wobei die Radanordnung (10) aufweist: ein Wellenteil (13,28), einen Radkörper (11) aus Polymermaterial mit einer äußeren Umfangsfläche (61), die längs der Führungsschiene (60) rollen kann, eine erste Halteeinrichtung (23, 31), die sich von dem Wellenteil (13,28) am äußeren Ende des Wellenteils (13,28) bezüglich der Trageinrichtung (15,16) nach außen erstreckt, wobei die erste Halteeinrichtung (23,31) einen Außenumfang (62) aufweist, der in einem radialen Abstand zwischen der äußeren Umfangsfläche (61) des Radkörpers (11) und einem äußeren Durchmesser (66) des Wellenteils (13,28) angeordnet ist, sowie eine Verbindungseinrichtung (14) zum Verbinden des Wellenteils (13,28) mit der Trageinrichtung (15,16) und zum positiven Verhindern der Einwirkung eines Axialdrucks auf die Radialflächen des Radkörpers (11) über einen vorbestimmten Grenzwert hinaus, um bei Betrieb eine Drehung des Radkörpers (11) im zusammengebauten Zustand zu ermöglichen, gekennzeichnet durch getrennte Trockenlagereinrichtungen (12), die sich axial zwischen dem Wellenteil (13,28) und dem Radkörper (11) erstrekken, wobei die Lagereinrichtungen (12) einen inhärenten trockenen Reibungskoeffizienten besitzen, der eine Drehung der Trockenlagereinrichtungen (12) auf dem Wellenteil (13,28) während des Rollens des Radkörpers (11) längs der Führungsschiene (63) ermöglichen, wobei die Lagereinrichtungen (12) ferner eine erste in axialer Richtung weisende Lagerfläche (65) aufweisen, die eine radiale Außenkante (64) in einem radialen Abstand besitzt, der wenigstens gleich demjenigen des Außendurchmessers (62) der ersten Halteeinrichtung (23,31) ist, wodurch eine Gleitlagerberührung zwischen der ersten axial weisenden Lagerfläche (65) und einer inneren Oberfläche der ersten Halteeinrichtung (23,31) auftritt.

2. Radanordnung (10) nach Anspruch 1, gekennzeichnet durch eine zweite Halteeinrichtung (23,35,53,55), welche an einem inneren Ende des Wellenteils (13,28) bezüglich der ersten Halteeinrichtung (23,31) angeordnet ist, wobei die Lagereinrichtungen (12) eine zweite axial weisende Lagerfläche (65) aufweisen, wodurch eine Gleitlagerberührung zwischen der zweiten axial weisenden Lagerfläche (65) und einer inneren Oberfläche der zweiten Halteeinrichtung (32,35,53,55) auftritt.

3. Radanordnung (10) nach Anspruch 1, dadurch gekennzeichnet, daß die erste Halteeinrichtung (23,31) einstückig mit dem Wellenteil (13,28) ausgebildet ist.

4. Radanordnung (10) nach Anspruch 2 oder 3, dadurch gekennzeichnet, daß die zweite Halteeinrichtung (23,35, 53,55) mit dem Wellenteil (13,28) einstückig ausgebildet ist.

5. Radanordnung (10) nach Anspruch 1, dadurch gekennzeichnet, daß der Radkörper (11) aus hitzehärtbarem Kunststoff besteht.

6. Radanordnung (10) nach Anspruch 5, dadurch gekennzeichnet, daß der Radkörper (11) aus mit Fasermaterialien verstärktem hitzehärtbarem Kunststoff besteht.

7. Radanordnung (10) nach Anspruch 6, dadurch gekennzeichnet, daß die Fasermaterialien gewickelt oder geschichtet und durch ein hitzehärtbares Harz gebunden sind.

8. Radanordnung (10) nach Anspruch 6 oder 7, dadurch gekennzeichnet, daß die Fasermaterialien Aramide sind.

## Revendications

1. Train de roulement (10) adapté à être relié à rotation à un support (15, 16) pour utilisation dans un système transporteur comprenant une glissière de guidage (60) le long de laquelle le train de roulement (10) est adapté à se déplacer tandis que ledit support (15, 16) supporte une charge, ledit train de roulement (10) comprenant un arbre (13, 28), un corps de roue (11) fait de matériaux polymères comportant une surface périphérique externe (61) adaptée à rouler le long de ladite g!issière de guidage (60), un premier moyen de retenue (23, 31) s'étendant vers l'extérieur depuis ledit arbre (13, 28) à une extrémité en dehors dudit arbre (13, 28) relativement audit support (15, 16), ledit premier moyen de retenue (23, 31) ayant un périmètre externe (62) situé à une distance radiale entre la surface périphérique externe (61) dudit corps de roue (11) et un diamètre externe (66) dudit arbre (13, 28), et un moyen de connexion (14) adapté à relier ledit arbre (13, 28) audit support (15, 16) et empêchant positivement qu'une pression axiale soit appliquée sur les faces radiales dudit corps de roue (11) au-delà d'une limite prédéterminée permettant la rotation fonctionnelle dudit corps de roue (11) après assemblage, ledit train de roulement (10) étant caractérisé par un palier sec à pièces distinctes (12) s'étendant axialement entre ledit arbre (13, 28) et ledit corps de roue (11), ledit palier (12) ayant un coefficient de frottement sec intrinsèque adapté à permettre la rotation dudit palier sec (12) sur ledit arbre (13, 28) durant le roulement dudit corps de roue (11) le long de ladite glissière de guidage (60), ledit palier (12) comprenant en outre une première surface portante donnant axialement (65) comportant un bord externe radialement (64) à une distance radiale au moins égale à celle dudit périmètre externe (62) du premier moyen de retenue (23, 31) de sorte qu'un contact porteur à glissement se produise entre ladite première surface portante donnant axialement (65) et une surface interne dudit premier moyen de retenue (23, 31).

2. Train de roulement (10) selon la revendication 1, caractérisé en outre par un second moyen de retenue (23, 35, 53, 55) situé à une extrémité en dedans dudit arbre (13, 28) relativement audit premier moyen de retenue (23, 31), ledit palier (12) comprenant une seconde surface portante donnant axialement (65) de sorte qu'un contact porteur à glissement se produise entre ladite seconde surface portante donnant axialement (65) et une surface interne dudit second moyen de retenue (23, 35, 53, 55).

3. Train de roulement (10) selon la revendication 1, caractérisé en ce que ledit premier moyen de retenue (23, 31) est formé d'un seul tenant avec ledit arbre (13, 28).

4. Train de roulement (10) selon la revendication 2 ou 3, caractérisé en ce que ledit second moyen de retenue (23, 35, 53, 55) est formé d'un seul tenant avec ledit arbre (13, 28).

5. Train de roulement (10) selon la revendication 1, caractérisé en ce que ledit corps de roue (11) est fait d'un matériau de plastique thermodurcissable.

6. Train de roulement (10) selon la revendication 5, caractérisé en ce que ledit corps de roue (11) est fait d'un matériau de plastique thermodurcissable renforcé de matériaux de fibres.

7. Train de roulement (10) selon la revendication 6, caractérisé en ce que lesdits matériaux de fibres sont enroulés ou laminés et liés par une résine thermodurcissable.

8. Train de roulement (10) selon la revendication 6 ou 7, caractérisé en ce que lesdits matériaux de fibres sont des aramides.
